# EUROPÄISCHE PATENTANMELDUNG

(11) **EP 1 186 855 A2**
(43) Veröffentlichungstag der Anmeldung: **13.03.2002**
(21) Anmeldenummer: 01120835.2
(22) Anmeldetag: 30.08.2001
(51) Int. Cl.: G01B 11/06, G01B 15/02, G01B 21/08

(54) **Verfahren zur zerstörungsfreien Wandstärkenprüfung**

(30) Priorität: 07.09.2000 DE 10044169
(71) Anmelder: DaimlerChrysler AG, 70567 Stuttgart (DE)
(72) Erfinder: Knorpp, Ralph, Dr., 70193 Stuttgart (DE); Vitkin, Dimitri, Dr., 89075 Ulm (DE)

(57) **Zusammenfassung**

Die Erfindung betrifft ein Verfahren zur zerstörungsfreien Wandstärkenprüfung eines Bauteils, bei dem das Bauteil oder die Oberfläche des Bauteils im wesentlichen vollständig berührungsfrei vermessen und durch digitale Daten beschrieben wird. Gemäß der Erfindung werden automatisch eine Vielzahl von Oberflächenpunkten des Bauteils in einem dreidimensionalen Koordinatensystem berechnet, welche das Bauteil im wesentlichen vollständig beschreiben. Von jedem der Oberflächenpunkte aus wird in einer Richtung, die senkrecht zu der Oberfläche des Bauteils an dem Oberflächenpunkt in das Material hinein verläuft, nach mindestens einem entgegengesetzten Oberflächenpunkt gesucht. Die Wandstärke des Bauteils an dem Oberflächenpunkt wird als der Abstand zwischen dem Oberflächenpunkt und dem mindestens einen entgegengesetzten Oberflächenpunkt ermittelt. Das Bauteil wird visuell dargestellt, und in der visuellen Darstellung werden Oberflächenpunkte hervorgehoben, für die die Wandstärke einen oder mehrere vorgegebene Werte unterschreitet und/oder überschreitet. Die Erfindung ermöglicht eine zuverlässige und vollständige automatische Erfassung von Wandstärken und eine schnelle Begutachtung von Bauteilen bzw. kritischen Wandstärken.

## Beschreibung

Die Erfindung betrifft ein Verfahren zur zerstörungsfreien Wandstärkenprüfung eines Bauteils, bei dem das Bauteil oder die Oberfläche des Bauteils im wesentlichen vollständig berührungsfrei vermessen und durch digitale Daten beschrieben wird.

Mechanisch und thermisch belastete Bauteile wie zum Beispiel Aggregateteile (Zylinderköpfe, Achsen, etc.) oder Triebwerkskomponenten (z.B. Turbinenschaufeln) müssen auf Einhaltung von Mindestwandstärken geprüft werden. In der Prüfeinweisung für solche Bauteile wird häufig ein Mindestwert für die Wandstärke angegeben, der nirgendwo am Bauteil unterschritten werden darf. Die Wandstärken z.B. an Zylinderköpfen werden zur Zeit dadurch geprüft, dass man das Bauteil in Einzelteile zersägt, um alle Stellen zugänglich zu machen, und anschließend eine manuelle Prüfung mittels einer speziellen Messuhr vornimmt. Neben der Zerstörung des Bauteils liegt der Hauptnachteil dieser Methode darin, dass aufgrund des fehlenden Bezugs zum Koordinatensystem des Bauteils ein Rückschluss vom Fehler (dünne Wand) auf die Fehlerursache (z.B. Versatz eines Sandkerns, wenn das Bauteil ein Gussteil ist) nur schwer möglich ist.

Von den Firmen BIR, SMS und Aracor, etc. gibt es Computertomographie-Systeme zur zerstörungsfreien Prüfung von Bauteilen. Die Computertomographie liefert einen Stapel zweidimensionale Grauwertschnittbilder durch das Bauteil, die auf einem Computer einzeln dargestellt werden können. Zu diesen Systemen gibt es außerdem System-software zur Prüfung von ausgewählten Wandstärken in einzelnen zweidimensionalen Grauwertschnittbildern. Die Prüfung findet interaktiv statt, in Wechselwirkung mit dem Anwender, d.h. es ist nicht automatisch eine vollständige Prüfung möglich. Der Hauptnachteil dieser Methode ist, dass reale Wandstärken geringer als in den zweidimensionalen Schnittbildern sein können, da der Schnitt im Allgemeinen nicht senkrecht zur Wand liegt.

Der Erfindung liegt die Aufgabe zugrunde, ein Verfahren zur zerstörungsfreien Wandstärkenprüfung von Bauteilen zu schaffen, das eine zuverlässige automatische Erfassung aller tatsächlich auftretenden Wandstärken und eine schnelle Begutachtung der Bauteile bzw. kritischer Wandstärken durch den Anwender ermöglicht.

Diese Aufgabe wird bei einem gattungsgemäßen Verfahren durch die kennzeichnenden Merkmale des Patentanspruchs 1 gelöst.

Indem man von jedem der Oberflächenpunkte aus im Wesentlichen senkrecht in das Material hinein nach Oberflächenpunkten auf einer entgegengesetzten Oberfläche sucht, findet man zuverlässig überall die geringste Materialstärke.

Im Wesentlichen senkrecht bedeutet hier, dass zunächst senkrecht in das Material hinein ein Zielpunkt der gegenüberliegenden Oberfläche gesucht und ermittelt wird und danach innerhalb eines vorzugebenden Toleranzbereiches um den Zielpunkt herum weitere Punkte ausgewählt werden und deren Abstand zum Ausgangspunkt bestimmt wird. Der kleinste Abstand gibt die jeweilige Materialstärke an.

Es kann zwar sein, dass diese Art der Suche nicht auf Anhieb die tatsächliche Materialstärke liefert. Zum Beispiel, wenn das Bauteil auf einander entgegengesetzten Seiten von unterschiedlich gekrümmten Oberflächen begrenzt wird, kann es vorkommen, dass die Suche von einer Seite aus nicht die geringste Materialstärke liefert. In diesem Fall erhält man die richtige Materialstärke aber von irgendeinem Oberflächenpunkt auf der anderen Seite aus, da die Berechnung für sämtliche Oberflächenpunkte durchgeführt wird. Somit ist die tatsächliche Materialstärke zu einem Oberflächenpunkt der kleinste Wert, den man von diesem Oberflächenpunkt aus oder von irgendwelchen anderen Oberflächenpunkten aus in Richtung auf den zuerst betrachteten Oberflächenpunkt erhält.

Das erfindungsgemäße Verfahren kann vollautomatisch durchgeführt werden. Der Anwender muss lediglich den oder die Grenzwerte für die Wandstärke eingeben, auf deren Einhaltung das Bauteil zu prüfen ist. In der visuellen Darstellung, zum Beispiel einer Bildschirmanzeige, werden dann alle Oberflächenpunkte hervorgehoben, für die die Berechnung ergeben hat, dass die Wandstärke den oder die Grenzwerte unterschreitet und/oder überschreitet. Zum Beispiel können in einer dreidimensionalen Schwarz-Weiß-Darstellung des Bauteils auf dem Bildschirm solche Stellen farbig markiert werden, an denen die Wandstärke kleiner als ein vorgegebener Mindestwert ist oder an denen die Wandstärke zwischen einem oberen und einem unteren Grenzwert liegt. Insbesondere wenn das dargestellte Bauteil transparent oder auf dem Bildschirm drehbar ist, kann der Anwender sehr leicht erkennen, ob das Bauteil irgendwelche Bereiche mit kritischer Wandstärke aufweist.

Das dreidimensionale Koordinatensystem, in dem das Bauteil visualisiert wird, ist vorteilhaft das gleiche, in dem die Messdaten des Bauteils nach der Messung vorliegen, zum Beispiel kartesische Koordinaten oder Zylinderkoordinaten. Das einheitliche Koordinatensystem ermöglicht einen gezielten Rückschluss von gefundenen Fehlern (z.B. dünne Wände) auf die Fehlerursachen (z.B. Versatz eines Sandkerns im Falle eines Gussteils).

Die Vermessung des Bauteils in drei Dimensionen erfolgt vorzugsweise mittels optischer 3-D-Koordinatenmesstechnik (z.B. Laserscanner, Streifenprojektions-Sensoren etc.) oder tomographischen Messgeräten (z.B. Röntgen-Computertomographen). Bei geeigneter Auswahl des Messgerätes können Bauteile vollständig vermessen werden, einschließlich möglicher Innenstrukturen. Das Ergebnis ist eine digitale Beschreibung des Bauteils, die in einer der folgenden Formen vorliegen kann:
1. Ein Stapel dreidimensionaler Grauwertschnittbilder durch das Bauteil oder ein dreidimensionaler Voxeldatensatz (ein Voxel ist ein kleines Volumenelement mit einem Grauwert, der ein Maß für die Dichte des Bauteils in diesem Volumenelement ist).
2. Eine dichte Punktewolke, welche die Oberfläche des Bauteils beschreibt.
3. Eine Dreiecksvernetzung (Triangulierung), welche die Oberfläche des Bauteils beschreibt.

In jedem dieser drei Fälle hat man eine digitale Beschreibung des Ist-Zustands eines Bauteils, auf der die automatische Analyse des Bauteils auf Wandstärken aufbaut.

In dem ersten Fall berechnet man aus einem Voxeldatensatz Oberflächenpunkte des Bauteils, indem man zum Beispiel ausnutzt, dass sich der Grauwert der Voxel an den Oberflächen des Bauteils im allgemeinen nicht sprunghaft von einem auf einen anderen Wert ändert. Das heißt, man nimmt als Oberflächenpunkte z.B. die Mittelpunkte von Voxeln, die einen Grauwert haben, der in einem vorgegebenen Bereich zwischen dem Grauwert des Materials des Bauteils und dem Grauwert von Gebieten liegt, in denen sich kein Material befindet. Diese Punkte, die auf oder in der Nähe einer Iso-Grauwert-Fläche liegen, bilden eine dichte Punktewolke.

Falls das Bauteil durch einen Stapel dreidimensionaler Grauwertschnittbilder beschrieben wird, kann man die vorstehende Berechnung analog an den Pixeln der Grauwertschnittbilder durchführen, und anschließend beschreibt man die Orte der erhaltenen Oberflächenpunkte in dem dreidimensionalen Koordinatensystem. Oder man fügt zuerst die Grauwertschnittbilder zusammen und erhält einen dreidimensionalen Voxeldatensatz, in dem jedes Voxel einem kleinen Volumen in dem verwendeten Koordinatensystem entspricht und einen zugehörigen Grauwert hat. Hierfür gibt es bereits kommerzielle Softwaremodule, z.B. die Software MIMICS der Firma MATERIALISE oder die Software VG STUDIO MAX von VOLUME GRAPHICS.

Für jeden Oberflächenpunkt wird dann durch ein Ausgleichsverfahren mit Hilfe von weiteren Oberflächenpunkten in seiner Nähe eine lokale Tangentialebene ermittelt. Die Richtung, in der anschließend nach weiteren Bauteiloberflächen gesucht wird, ist jeweils die lokale Normale auf der lokalen Tangentialebene, d.h. der Normalenvektor der Tangentialebene, der in das Material hinein weist.

In dem zweiten Fall, in dem die Oberfläche des Bauteils infolge der verwendeten Messtechnik durch eine dichte Punktewolke beschrieben wird, wird ebenfalls zu jedem Oberflächenpunkt durch ein Ausgleichsverfahren eine lokale Tangentialebene ermittelt, deren lokale Normale durch den Normalenvektor der Tangentialebene gegeben ist.

In dem dritten Fall, in dem die Oberfläche des Bauteils infolge der verwendeten Messtechnik durch eine Dreiecksvernetzung beschrieben wird, kann man irgendwelche Punkte der Dreiecke als die Oberflächenpunkte des Bauteils nehmen, vorzugsweise die Schwerpunkte der Dreiecke, wobei die lokale Normale, d.h. die Suchrichtung für jeden Oberflächenpunkt, zum Beispiel durch den Normalenvektor des entsprechenden Dreiecks gegeben ist.

Weitere Merkmale und Vorteile der Erfindung ergeben sich aus der folgenden Beschreibung von Ausführungsbeispielen und aus der Zeichnung, auf die Bezug genommen wird. Darin zeigen:
Fig. 1 eine Prinzipskizze eines Computertomographen zur Prüfung von Bauteilen,
Fig. 2 eines von vielen zweidimensionalen Grauwertschnittbildern eines Bauteils,
Fig. 3 eine Schnittansicht durch ein Bauteil, an dem eine Wandstärkenprüfung durchzuführen ist,
Fig. 4 eine Perspektivskizze zur Erläuterung einer Suchmethode auf Basis einer Dreiecksvernetzung, die ein Bauteil beschreibt, und
Fig. 5 ein Flussdiagramm zur Erläuterung der wesentlichen Verfahrensschritte der zerstörungsfreien Wandstärkenprüfung.

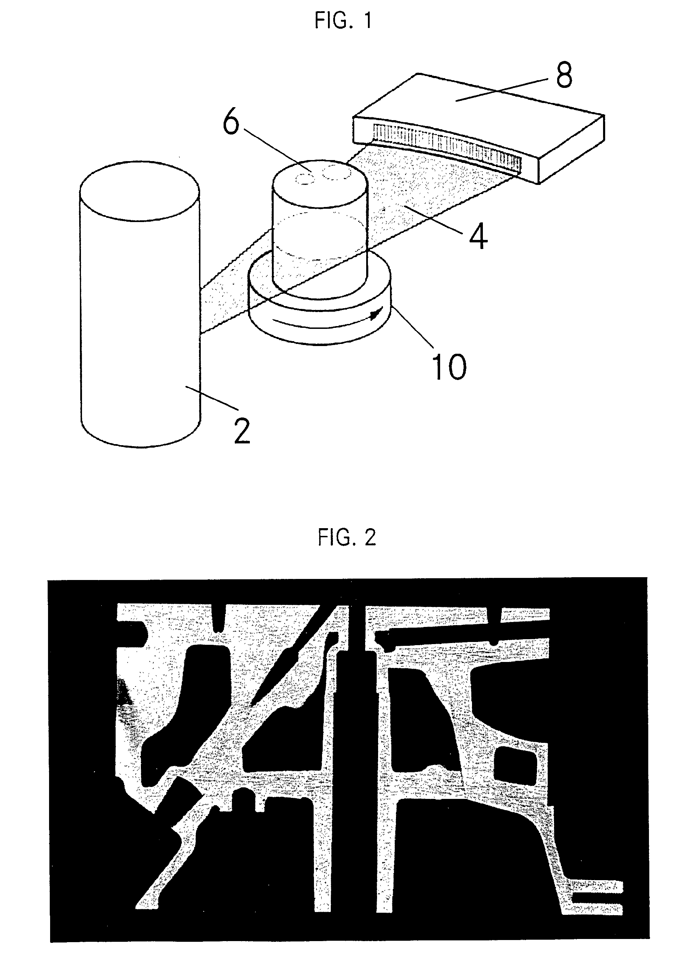

In Fig. 1 strahlt eine Röntgenröhre 2 Röntgenstrahlen 4 durch ein zu untersuchendes Bauteil 6 auf einen Detektor 8. Das Bauteil 6 kann mittels eines Manipulators 10 gedreht sowie angehoben und abgesenkt werden. Nach vollständiger Durchleuchtung des Bauteil 6 liefert ein nicht gezeigter Rechner des Computertomographen einen Stapel von ca. 1000 Grauwertschnittbildern, die z.B. in Abständen von 0,5 mm in parallelen horizontalen Ebenen liegen und jeweils eine Auflösung von z.B. 0,2 mm x 0,2 mm haben. Die Grauwerte liegen z.B. in einem Bereich zwischen 0 (schwarz, Luft) und 255 (weiß, Material). Fig. 2 zeigt eines von vielen zweidimensionalen Grauwertschnittbildern eines Bauteils, das sich als hellere Bereiche auf dunklem Hintergrund abhebt.

Fügt man alle Grauwertschnittbilder zusammen, so erhält man einen dreidimensionalen Voxeldatensatz. In dem obigen Beispiel entspricht ein Voxel in einem kartesischen Koordinatensystem einem Volumen von 0,2 mm x 0,2 mm x 0,5 mm und hat einen Grauwert im Bereich von 0 bis 255.

Voxel, die an den Grenzen Material-Luft liegen, werden durch Punkte repräsentiert, welche zum Beispiel als die Mittelpunkte dieser Voxel gewählt werden können. Diese Punkte bilden zusammen eine dichte Punktewolke, welche die Oberfläche des Bauteils beschreibt.

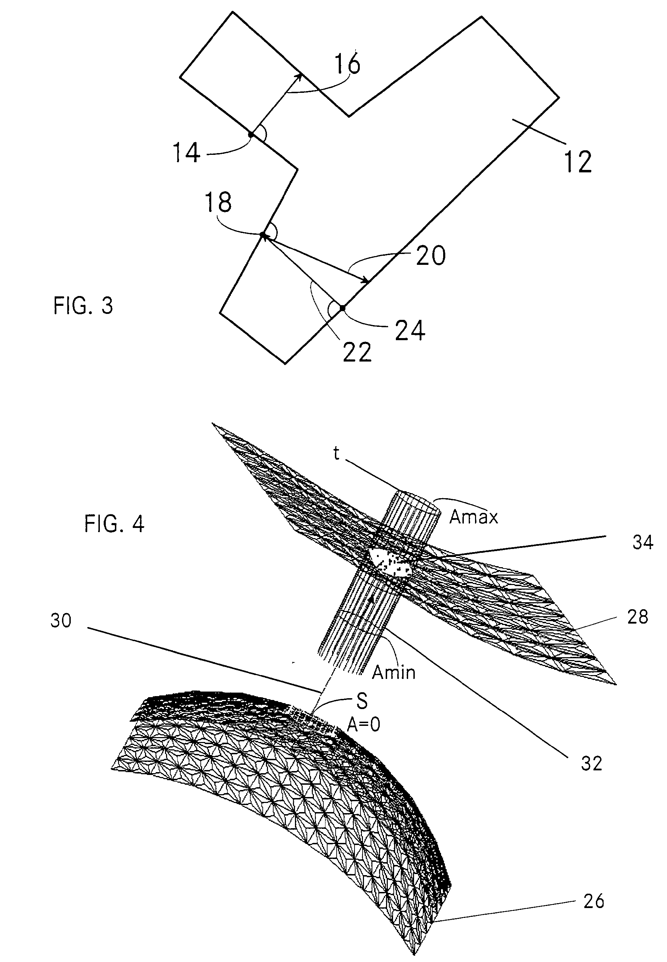

Fig. 3 ist eine Schnittansicht durch ein Bauteil 12, an dem eine Wandstärkenprüfung durchzuführen ist. Die zu einem Oberflächenpunkt 14 gehörende Wandstärke wird ermittelt, indem eine lokale Normale 16 senkrecht in das Material hinein gelegt wird. Der Abstand zwischen dem Oberflächenpunkt 14 und der Stelle, an der die lokale Normale 16 aus dem Bauteil 12 austritt, ist die Wandstärke an dieser Stelle.

So eine lokale Normale erhält man bei einer Punktewolke, welche die Oberfläche des Bauteils beschreibt, zum Beispiel dadurch, dass man zu jedem Punkt der Punktewolke anhand von Punkten in der Umgebung eine lokale Tangentialebene berechnet. Damit die berechnete Tangentialebene möglichst genau der tatsächlichen Tangentialebene an dieser Stelle entspricht, geschieht dies durch eine Ausgleichsrechnung anhand einer Anzahl von umgebenden Punkten. Die Normale auf der lokalen Tangentialebene ist dann die lokale Normale 16.

Wie man in Fig. 3 erkennt, kann es sein, dass die Wandstärkeberechnung durch Normalenbildung für einige Oberflächenpunkte, z.B. einen Oberflächenpunkt 18, mit dem Abstand 20 nicht den kleinsten Abstand zu einer Gegenfläche liefert. Jedoch erhält man den kleinsten Abstand 22 an dieser Stelle, sobald die Berechnung zu einem Punkt 24 auf der entgegengesetzten Seite des Bauteils kommt. Für die Prüfung von Bauteilen auf Mindestwandstärken genügt es, wenn als Wandstärke immer der Abstand entlang der lokalen Normalen 16 genommen wird und jede Unterschreitung angezeigt wird. Wenn Wandstärken angezeigt werden sollen, die sich innerhalb bestimmter Grenzen bewegen, müssen aber Mehrdeutigkeiten vermieden werden. In so einem Fall eliminiert man einfach die Längen der längeren Strecken, die durch den Oberflächenpunkt 18 hindurchgehen, in dem obigen Beispiel den Abstand 20.

Für den Fall, dass die Oberfläche des Bauteils nicht durch eine dichte Punktewolke beschrieben wird, wie in dem obigen Beispiel, sondern durch eine Dreiecksvernetzung, wird die Ermittlung der lokalen Wandstärke im Folgenden näher beschrieben.

Fig. 4 zeigt zwei einander entgegengesetzte Oberflächen 26 und 28 eines Bauteils, das mit 3-D-Koordinatenmesstechnik abgetastet worden ist, die eine Triangulierung oder Dreiecksvernetzung liefert, welche die Oberflächen 26 und 28 beschreibt. Das Material des Bauteils erstreckt sich zwischen den Oberflächen 26 und 28.

Zuerst wird der Schwerpunkt von jedem Dreieck berechnet. Nacheinander wird zu jedem Dreieck und seinen drei Nachbardreiecken eine lokale Flächennormale durch den Schwerpunkt berechnet. Die Einbeziehung der Nachbardreiecke ist vorteilhaft, um lokale Oberflächendefekte oder Messfehler auszugleichen. Bei einer grobmaschigeren Dreiecksvernetzung kann es aber auch genügen, jeweils die lokale Flächennormale der Einzeldreiecke zu berechnen.

Auf der lokalen Flächennormalen liegt jeweils ein Normalenvektor 30, der vom Schwerpunkt S aus in das Material des Bauteils hinein zeigt. Eine variable Strecke den Normalenvektor 30 entlang habe die Länge A, d.h. am Schwerpunkt S ist A=0.

In diesem Beispiel wird nach Stellen am Bauteil gesucht, an denen die Wandstärke zwischen einem unteren Grenzwert Amin und einem oberen Grenzwert Amax liegt. Die Werte Amin und Amax werden vor Durchführung des Verfahrens vom Anwender eingegeben. Außerdem gibt der Anmelder eine Suchtoleranz t ein, die der Durchmesser eines Zylinders um die Flächennormale herum ist, in dem zwischen den Abständen Amin und Amax von der Oberfläche 26 nach weiteren Bauteiloberflächen (in Fig. 4 der Oberfläche 28) gesucht wird.

Der Suchbereich 32 ist ein Zylinder mit dem Durchmesser t, der sich der Länge nach zwischen Amin und Amax erstreckt, wie in Fig. 4 dargestellt. Alle Schwerpunkte oder Eckpunkte 34 von Dreiecken auf der Oberfläche 28, die im Suchbereich 32 liegen, sowie deren Abstand vom Schwerpunkt S des Ausgangsdreiecks auf der Oberfläche 26 werden ermittelt und gespeichert. Der kleinste dieser Werte ist die gesuchte Wandstärke zwischen den Oberflächen 26 und 28.

Nachdem alle Dreiecke wie oben beschrieben analysiert worden sind, wird das Bauteil oder ein interessierender Teil davon z.B. durch ein CAD-Programm perspektivisch auf einem Bildschirm dargestellt, und in der visuellen Darstellung werden alle Oberflächenpunkte, die in den jeweiligen Suchbereichen 32 liegen, in einer zur Farbe des Bauteils kontrastierenden Farbe dargestellt. Das heißt, Bereiche des Bauteils mit Wandstärken zwischen Amin und Amax werden in der Darstellung hervorgehoben und können näher betrachtet werden, z.B. indem man die perspektivische Darstellung virtuell dreht, wie es mit CAD-Programmen möglich ist.

Die Farbe, in der die gefundenen Bereiche auf dem Bildschirm dargestellt werden, kann automatisch in Abhängigkeit von der lokalen Wandstärke gewählt werden. Wenn die Wandstärken in den gefundenen Bereichen variieren, erhält man dann eine Darstellung in Regenbogenfarben, von denen jede Farbe eine Wandstärke repräsentiert. Die zu jeder Farbe gehörenden Wandstärken können als numerische Werte entlang eines ebenfalls auf dem Bildschirm dargestellten Farbspektrums angegeben werden, so dass der Anwender sofort die entsprechenden Zahlenwerte erkennen kann.

Neben der oben beschriebenen visuellen Darstellung kann das CAD-Programm viele weitere nützliche Informationen liefern, zum Beispiel einen eventuellen Versatz der gefundenen Bereiche von vorgegebenen Sollpositionen numerisch anzeigen.

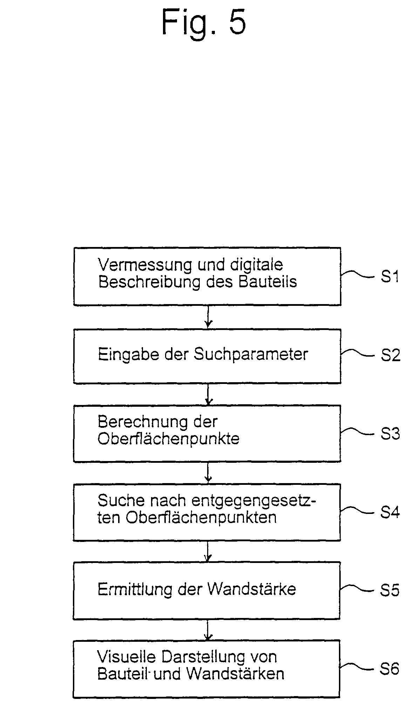

Die wesentlichen Verfahrensschritte für die beschriebene zerstörungsfreie Wandstärkenprüfung sind zusammenfassend in Fig. 5 dargestellt.

In einem Verfahrensschritt S1 wird das Bauteil oder die Oberfläche des Bauteils rechnergesteuert im wesentlichen vollständig berührungsfrei vermessen und durch digitale Daten beschrieben, die gespeichert werden. In einem Verfahrensschritt S2 gibt der Anwender die gewünschten Suchparameter ein, z.B. die oben erwähnten Parameter t, Amin und Amax. In einem Verfahrensschritt S3 werden automatisch eine Vielzahl von Oberflächenpunkten des Bauteils in einem dreidimensionalen Koordinatensystem berechnet, welche das Bauteil im wesentlichen vollständig beschreiben. In einem Verfahrensschritt S4 wird von jedem der Oberflächenpunkte aus in einer Richtung, die senkrecht zu der Oberfläche des Bauteils an dem Oberflächenpunkt in das Material hinein verläuft, nach mindestens einem entgegengesetzten Oberflächenpunkt gesucht. In einem Verfahrensschritt S5 wird die Wandstärke des Bauteils an dem Oberflächenpunkt als der Abstand zwischen dem Oberflächenpunkt und dem mindestens einen entgegengesetzten Oberflächenpunkt ermittelt. Schließlich wird in einem Verfahrensschritt S6 das Bauteil visuell dargestellt, und in der visuellen Darstellung werden Oberflächenpunkte hervorgehoben, für die die Wandstärke den Suchparametern entspricht bzw. in irgendeiner Weise davon abweicht.

## Patentansprüche

1. Verfahren zur zerstörungsfreien Wandstärkenprüfung eines Bauteils, bei dem das Bauteil oder die Oberfläche des Bauteils im wesentlichen vollständig berührungsfrei vermessen und durch digitale Daten beschrieben wird, **dadurch gekennzeichnet, dass** ein Rechner folgendes durchführt:
a) automatisch eine Vielzahl von Oberflächenpunkten des Bauteils in einem dreidimensionalen Koordinatensystem berechnet, welche das Bauteil im wesentlichen vollständig beschreiben,
b) von jedem der Oberflächenpunkte aus in einer Richtung, die im wesentlichen senkrecht zu der Oberfläche des Bauteils an dem Oberflächenpunkt in das Material hinein verläuft, nach mindestens einem entgegengesetzten Oberflächenpunkt sucht,
c) die Wandstärke des Bauteils an dem Oberflächenpunkt als den kleinsten Abstand zwischen dem Oberflächenpunkt und dem mindestens einen entgegengesetzten Oberflächenpunkt ermittelt,
d) das Bauteil visuell darstellt und in der visuellen Darstellung Oberflächenpunkte hervorhebt, für die die Wandstärke einen oder mehrere vorgegebene Werte unterschreitet und/oder überschreitet.

2. Verfahren nach Anspruch 1, **dadurch gekennzeichnet, dass** die berührungsfreie Vermessung des Bauteils zu jedem aus einer Vielzahl von Punkten im dreidimensionalen Raum einen Grauwert liefert und dass die Oberflächenpunkte des Bauteils als Punkte berechnet werden, die einen Grauwert zwischen dem Grauwert des Materials des Bauteils und dem Grauwert von Gebieten haben, in denen sich kein Material des Bauteils befindet.

3. Verfahren nach Anspruch 1, **dadurch gekennzeichnet, dass** die berührungsfreie Vermessung des Bauteils eine Punktewolke im dreidimensionalen Raum liefert und dass die Oberflächenpunkte des Bauteils durch die Punkte der Punktewolke in dem dreidimensionalen Koordinatensystem gebildet werden.

4. Verfahren nach Anspruch 1, **dadurch gekennzeichnet, dass** die berührungsfreie Vermessung des Bauteils eine Dreiecksvernetzung im dreidimensionalen Raum liefert und dass die Oberflächenpunkte des Bauteils als vorbestimmte Punkte der Dreiecke berechnet werden.
